# EUROPEAN PATENT APPLICATION

(11) **EP 4 336 063 A1**
(43) Date of publication of application: **13.03.2024**
(21) Application number: 22194454.9
(22) Date of filing: 07.09.2022
(51) Int. Cl.: F16D 66/02

(54) **ELECTRICALLY OPERATED BRAKE ASSEMBLY, COMPUTER-IMPLEMENTED METHOD FOR CONTROLLING AN ELECTRICALLY OPERATED BRAKE ASSEMBLY, COMPUTER PROGRAM AND NON-VOLATILE DATA CARRIER**

(71) Applicant: Dellner Bubenzer AB, 781 70 Borlänge (SE)
(72) Inventor: PRIM, Viktor, 811 61 SANDVIKEN (SE)
(74) Representative: Brann AB

(57) **Abstract**

An electrically operated brake assembly for a rail vehicle contains: a rotating member mechanically linked to a wheel axle of the rail vehicle, at least one friction member movable between an engaged position in which the friction member(s) contact/s the rotating member and a disengaged position in which the rotating member is freely rotatable, a gear assembly operating mechanically on the friction member(s), an electric motor controlled via a control signal to cause the gear assembly to operate on the friction member(s) to move between the engaged and disengaged positions, and a controller generating the control signal. When generating the control signal (710), the controller obtains a pulse-count signal (720) and a pressure signal (730). The pulse-count signal reflects an angular movement of an output shaft of the electric motor, and the pressure signal indicates a magnitude of a force experienced in the gear assembly when the friction member(s) is/are located in the engaged position and/or the disengaged position. Based on the pressure and pulse count signals, the controller checks if an alarm criterion is fulfilled (740) with respect to a wear of the friction member(s), and if so, triggers an alarm (750).

## Description

### TECHNICAL FIELD

The present invention relates generally to monitoring of brake arrangements for rail vehicles. Especially, the invention relates to an electrically operated brake assembly according to the preamble of claim 1 and a corresponding computer-implemented method. The invention also relates to a computer program and a non-volatile data carrier storing such a computer program.

### BACKGROUND

In operation of an electrically powered rail vehicle, the onboard motors are typically engaged as generators to decelerate the rail vehicle. However, for efficiency and safety reasons, one cannot rely solely on this braking strategy. In particular, a dedicated brake function will always be needed to ensure emergency braking functionality and that the rail vehicle remains stationary after that it has been brought to a stop. In many cases, the same brake units are used for different types of braking functionality, such as service braking, emergency braking and parking braking.

Typically, the brake unit includes a rotating member mechanically linked to a wheel axle of the rail vehicle plus one or more friction members arranged to be pressed against the rotating member to decelerate the rail vehicle. Specifically, the contact between the friction material, i.e. the lining in the brake pads or shoes creates frictional contact with the rotating member, e.g. a disc or a drum, creates the desired amount of braking torque to slow down the rail vehicle. Repeated braking operations progressively wear away friction material, which results in a progressively thinner brake lining. Therefore, at some point in time the friction material must be replaced.

Various solutions are known in the art for monitoring the wear of the brake linings. For example, US 10,919,513 describes a device and method for forecasting the brake lining wear of rail vehicles. Here, the lining thicknesses, the sliding speed, the contact pressure, the total braking time, and optionally the temperature or the brake power are determined in a parameterization process during test drives with measurements at predefined time intervals. The wear, the constant, as well as the material parameters are determined therefrom, where during the operating state, the wear rates are determined via the now known values of the material parameters and of the constants, and the wear is determined therefrom. From the maximum allowable wear values, a remaining total braking time is then determined until the next lining replacement is required. To determine the wear rate, the document studies lining surface contact pressure, sliding speed and braking time, and based thereon forecasts a remaining service life of the brake lining. However, the lining thickness, as such, is not measured, and this renders the forecast uncertain.

US 10,435,050 shows a method for monitoring and diagnosing components of a rail vehicle, as a singular rail vehicle or as part of a rail vehicle train consisting of a plurality of rail vehicles, with regard to the necessary repair or maintenance of at least one component. At least one measuring device captures at least one measurement variable, which is relevant to an assessment of a necessary repair or maintenance of the component. An evaluation device executes evaluation software based on instructions, data and/or software modules sent from a control center. Specifically, it is proposed that the lining thickness be detected by electrical loops integrated into the brake lining, which electrical loops are destroyed when the brake lining becomes worn down to the layer of the lining in which these loops are arranged. Then an electrical signal is generate, which indicates a corresponding degree of wear. Although this design may be useful, it increases the cost and complexity of the brake lining. The electrical loops also risk deteriorating the braking efficiency.

Thus, the known solutions for monitoring the wear of rail vehicle brake linings are associated with various technical shortcomings.

### SUMMARY

The object of the present invention is to mitigate the above problems and offer a solution that consistently measures the wear of the friction members during operation of the rail vehicle, provides advance notice of the wear, and enables a timely replacement of the friction members without impairing the braking capacity.

According to one aspect of the invention, the object is achieved by an electrically operated brake assembly for a rail vehicle. The brake assembly contains: a rotating member mechanically linked to a wheel axle of the rail vehicle; at least one friction member movable between an engaged position in which the at least one friction member contacts the rotating member and at least one disengaged position in which the rotating member is freely rotatable without contacting the at least one friction member; a gear assembly arranged to operate mechanically on the at least one friction member; an electric motor controllable via a control signal and configured to cause the gear assembly to operate on the at least one friction member to move between the engaged position and the at least one disengaged position; and a controller configured to generate the control signal. During the process of generating the control signal, the controller is configured to obtain a pulse-count signal and a pressure signal. Each pulse count in the pulse-count signal reflects a particular angular movement of an output shaft of the electric motor, and the pressure signal indicates a magnitude of a force experienced in the gear assembly when the at least one friction member is located in the engaged position and/or at least one disengaged positions. Based on the pressure and pulse count signals, the controller is configured to check if an alarm criterion is fulfilled with respect to a wear of the at least one friction member. If the alarm criterion is fulfilled, the controller is configured to trigger an alarm.

The above-described electrically operated brake assembly is advantageous because the pressure signal unambiguously ties the pulse count signal to an exact mechanical relationship between the at least one friction member and the rotating member. This, in turn, ensures a precise and reliable monitoring of the wear of the at least one friction member, such that replacement thereof can be effected in due time.

According to one embodiment of this aspect of the invention, the controller is configured to execute the steps:
(a1) record a first number of pulse counts obtained via the pulse count signal while generating the control signal to control the electric motor to cause the gear assembly to operate on the at least one friction member in an approaching direction wherein the at least one friction member is moved from a first one of the disengaged positions to the engaged position, continue to generate the control signal to control the electric motor to cause the gear assembly to operate on the at least one friction member in the approaching direction until the pressure signal exceeds a positive threshold value,
(b1) compare the first number of pulse counts to a base number of pulse counts recorded in a previous execution of step, if the base number is lower than the first number
(c1) increment a wear count by a difference between the first number and the base number, and if the wear count exceeds a threshold count
(d1) trigger the alarm.
The above gradual registering of the friction member wear provides an earliest possible indication of when a replacement is necessary. Namely, the wear may checked in connection with every single braking operation.

Preferably, the first one of the disengaged positions represents an idle distance between the rotating member and the at least one friction member, which idle distance defines a predefined resting position for the at least one friction member in between braking operations. Thus, the proposed wear monitoring can be combined with a quick-response service braking.

According to another embodiment of this aspect of the invention, the controller is configured to execute the steps:
(a2) generate the control signal to control the electric motor to operate on the gear assembly to cause the gear assembly to retract the at least one friction member outwards from the engaged position in a retreating direction from the rotating member until the pressure signal falls below a negative threshold value designating a maximum retraction of the at least one friction member from the rotating member, which maximum retraction represents a second one of the disengaged positions,
(b2) record a second number of pulse counts obtained via the pulse count signal while executing step, and if the second number exceeds a threshold count
(c2) trigger the alarm.
Thereby, when appropriate, for example before leaving a station, the rail vehicle can test the friction member wear against a fix reference measure that is represented by the maximum retraction of the least one friction member.

According to yet another embodiment of this aspect of the invention, the electric motor is configured to produce a rotational force on an output shaft of the electric motor, which rotational force is proportional to a drive current being fed into the electric motor. Here, the controller is configured to derive the pressure signal based on the drive current fed into the electric motor. Hence, the force sensor may for example be implemented in software running in the controller.

According to still other embodiments of this aspect of the invention, the gear assembly instead comprises a force sensor that is configured to generate the pressure signal, which force sensor may be arranged on a bolt in the gear assembly. The force sensor, in turn, may contain a load cell or a wire strain gauge. This renders the implementation robust and straightforward.

According to another embodiment of this aspect of the invention, the electric motor is a stepper motor, which is configured to generate the pulse-count signal. Consequently, no discrete component in the form of an angular position sensor is needed to produce the pulse-count signal.

Alternatively, the angular position sensor may be a component separate from the electric motor, which sensor for example is comprised in a Bevel gear connecting the output shaft of the electric motor with the gear assembly. Thereby, a non-stepper motor may be employed, which renders the design flexible. At the same time the design becomes volume efficient and the angular position sensor is kept physically protected.

According to a further embodiment of this aspect of the invention, the rotating member is a brake disc and the at least one friction member comprises two friction members arranged on a respective one of two pressing members configured to clamp the friction members against the brake disc to perform a braking action in response to a brake command. Such a disc brake arrangement typically allows for very efficient braking of the rail vehicle.

According to another aspect of the invention, the object is achieved by a computer-implemented method implemented in at least one processing circuitry, which method is for controlling an electrically operated brake assembly for a rail vehicle, and which brake assembly contains: a rotating member mechanically linked to a wheel axle of the rail vehicle; at least one friction member movable between an engaged position in which the at least one friction member contacts the rotating member and at least one disengaged position in which the rotating member is freely rotatable without contacting the at least one friction member; a gear assembly arranged to operate mechanically on the at least one friction member; and an electric motor controllable via a control signal and configured to cause the gear assembly to operate on the at least one friction member to move between the engaged position and the at least one disengaged position. The method involves generating the control signal. Moreover, while generating the control signal, the method involves obtaining a pulse-count signal and a pressure signal. Each pulse in the pulse-count signal reflects a particular angular movement of an output shaft of the electric motor, and the pressure signal indicates a magnitude of a force experienced in the gear assembly when the at least one friction member is located in at least one of the engaged position and one of the at least one disengaged positions. Based on the pulse-count and pressure signals, it is checked if an alarm criterion is fulfilled with respect to a wear of the at least one friction member, and if the alarm criterion is fulfilled, the method involves triggering an alarm. The advantages of this method, as well as the preferred embodiments thereof are apparent from the discussion above with reference to the proposed electrically operated brake assembly.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle containing an electrically operated brake assembly according to one embodiment of the invention;
- Figure 2: shows an electrically operated brake assembly according to one embodiment of the invention;
- Figures 3a-c: illustrate an engaged position, and different disengaged positions for the at least one friction member according to embodiments of the invention;
- Figure 4: shows a block diagram of a measurement controller according to one embodiment of the invention;
- Figures 5a-c: show graphs illustrating how the wear of the friction members is monitored according to a first embodiment of the invention;
- Figures 6a-c: show graphs illustrating how the wear of the friction members is monitored according to a second embodiment of the invention; and
- Figure 7: illustrates, by means of a flow diagram, the general method according to the invention.

### DETAILED DESCRIPTION

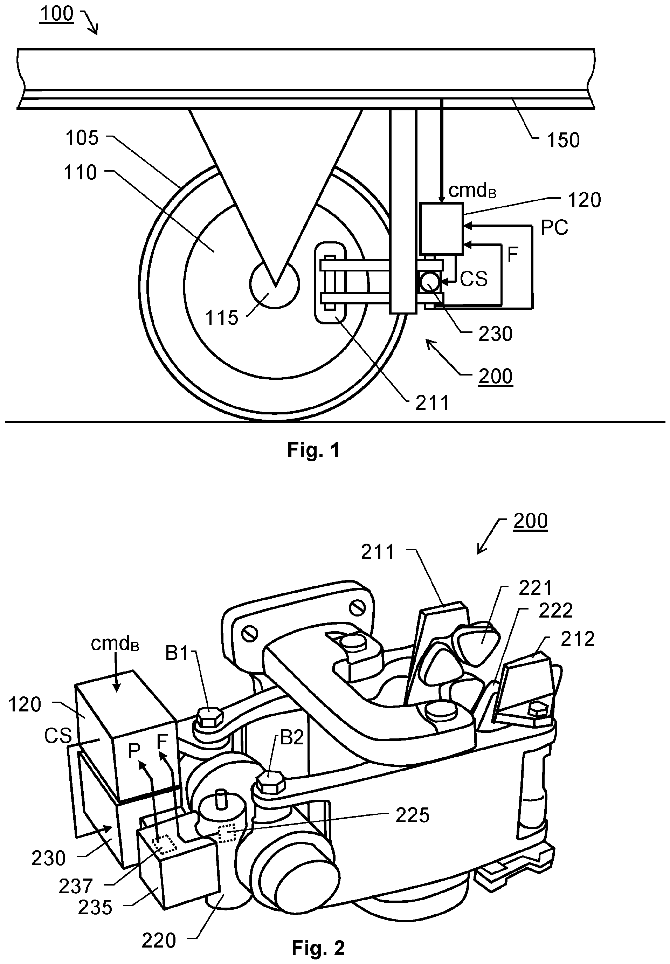

In Figure 1, we see a schematic representation of rail vehicle 100 containing an electrically operated brake assembly 200 according to one embodiment of the invention. The brake assembly 200 contains: a rotating member 110, at least one friction member 221 and 222, a gear assembly 220, an electric motor 230 and a controller 120 configured to obtain a pulse-count signal PC and pressure signal F. Each pulse count in the pulse-count signal PC reflects a particular angular movement of an output shaft of the electric motor 230. The pressure signal F indicates a magnitude of a force experienced in the gear assembly 220 when the at least one friction member 221 and 222 is located in at least one predefined position. As will be discussed below, the pressure signal F may either be generated by a force sensor 225, or be obtained in an alternative manner. Similarly, the pulse-count signal PC may be generated by an angular position sensor 237, or be obtained in an alternative manner.

The rotating member 110 is mechanically linked to a wheel axle 115 of the rail vehicle 100. Typically, the wheel axle 115, in turn, carries two wheels configured to roll on a respective rail. Figure 1 exemplifies one such wheel 105.

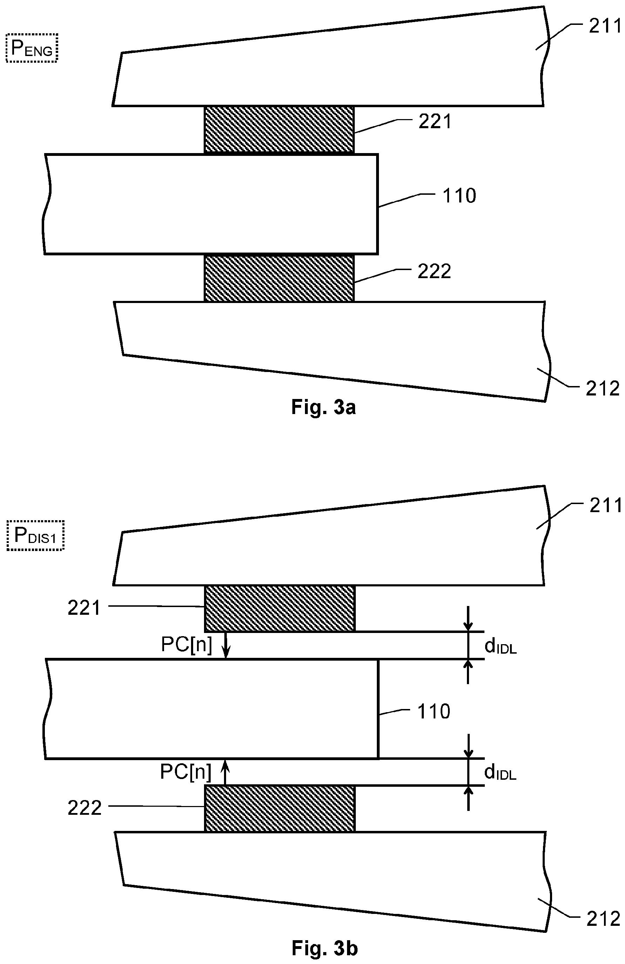

Referring now also to Figures 3a and 3b, the at least one friction member is here exemplified by 221 and 222 respectively. It should be noted, however, that the arrangement of the at least one friction member and the rotating member may be implemented in alternative ways. For example, the rotating member may be a rotating cylinder-shaped part onto which one or more friction members act either from the inside, such as in a conventional drum brake and/or from the outside. Thus, the rotating member 110 may be a brake disc and the friction member(s) 221/222 may contain two friction members arranged on a respective one of two pressing members 211 and 212 being configured to clamp the friction members 221 and 222 respectively against the brake disc 110 to perform a braking action in response to a brake command cmd_{B}, for instance received in the controller 120 via a control bus 150 in the rail vehicle 100.

In any case, the friction member(s) is/are movable between an engaged position P_{ENG} in which the friction member(s) 221 and 222 contact the rotating member 110, and at least one disengaged position P_{DIS1}/P_{DIS2} in which the rotating member 110 is freely rotatable without contacting any of the friction members 221 or 222. In one embodiment of the invention, the rotating member 110 is a brake disc and the at least one friction member contains two friction members as illustrated in Figures 1, 3a and 3b by 221 and 222 respectively, which friction members are arranged on a respective one of two pressing members 211 and 212 that are configured to clamp the friction members 221 and 222 respectively against the brake disc 110 and thus perform a braking action in response to the brake command cmd_{B}.

The gear assembly 220 is arranged to operate mechanically on the friction members 221 and 222, and the electric motor 230 is controllable via a control signal CS to cause the gear assembly 220 to operate on the friction members 221 and 222 to move between the engaged and disengaged positions PENG and P_{DIS1}/P_{DIS2} respectively.

Referring now also to Figure 2, according to one embodiment of the invention, a force sensor 225 is arranged in the gear assembly 220. The force sensor 225 may for example contain a load cell or a wire strain gauge and is configured to produce the pressure signal F that indicates a magnitude of a force at which the friction members 221 and 222 contact the rotating member 110, or are being pushed away therefrom against an outer end position. It is advantageous to include the force sensor 225 in the gear assembly 220 because thereby it is mechanically protected from external influence. Specifically, the force sensor 225 may be contained in one or both of a first bolts B1 and a second bolt B2 of the gear assembly 220, via which bolts B1 and B2 an output force from the electric motor 230 is conveyed to the friction members 221 and 222. As a result, the force sensor 225 will register a pressure signal that is directly translatable into a pressure at a contact surface between the friction members 221/222 and the rotating member 110 whenever these elements contact one another.

According to another embodiment of the invention, the electric motor 230 is designed to produce a rotational force on an output shaft of the electric motor 230, which rotational force is proportional to a drive current being fed into the electric motor 230. The controller 120 is further configured to derive the pressure signal F based on the drive current fed into the electric motor 230. Thus, the force sensor 225 is not needed. Instead its function is implemented internally in the controller 120, for example by running a software through which the pressure signal F calculated using the drive current and time as input parameters.

According to one embodiment of the invention, the electric motor 230 is a stepper motor, which is configured to generate the pulse-count signal PC. Consequently, no dedicated pulse generator is needed.

According to one embodiment of the invention, the brake assembly 200 contains an angular position sensor 237, which may be comprised in a Bevel gear 235 of the brake assembly 200. The Bevel gear 235 is arranged to connect the output shaft of the electric motor 230 with the gear assembly 220 so as to convey mechanical power from the electric motor 230 to the gear assembly 220, and further onto the friction members 221/222. The angular position sensor 237, which may be implemented by means of a tachometer is configured to produce the pulse-count signal PC. It is beneficial to include the angular position sensor 237 in the Bevel gear 235 because this renders the overall design physically compact, and at the same time, the angular position sensor 237 is shielded from dirt and mechanical damage.

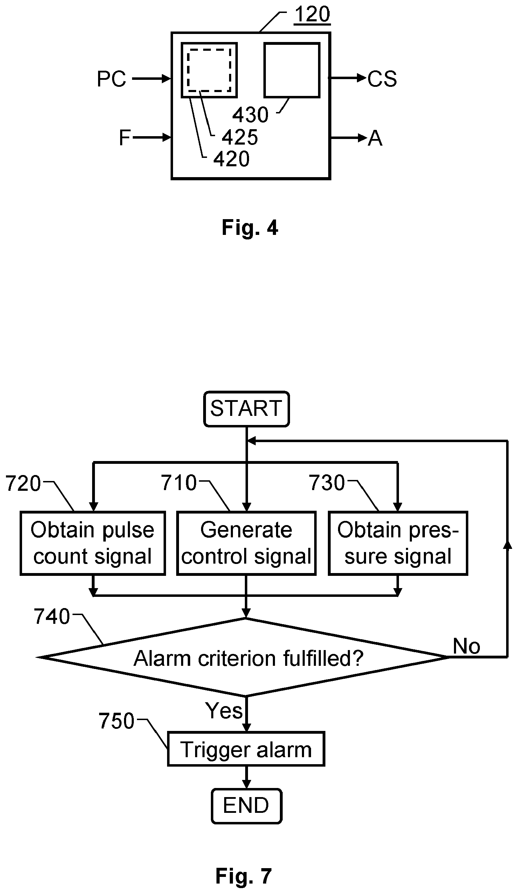

Figure 4 shows a block diagram of the controller 120 according to one embodiment of the invention. The controller 120 includes processing circuitry in the form of at least one processor 430 and a memory unit 420, i.e. non-volatile data carrier, storing a computer program 425, which, in turn, contains software for making the at least one processor 430 execute the actions mentioned in this disclosure when the computer program 425 is run on the at least one processor 430.

The force signal F is a potential input signal to the controller 120. However, as mentioned above, this signal may alternatively be obtained internally in the at least one processor 430 based on the drive current fed into the electric motor 230. Nevertheless, the pulse-count signal PC is an input signal to the controller 120. The controller 120 is configured to generate the control signal CS, and if an alarm criterion is fulfilled with respect to a wear of the at least one friction member(s) 221/222, trigger an alarm A. The controller 120 is configured to trigger the alarm A according to the below.

During the process of generating the control signal CS, the controller 120 is configured to obtain the pulse-count and pressure signals PC and F respectively.

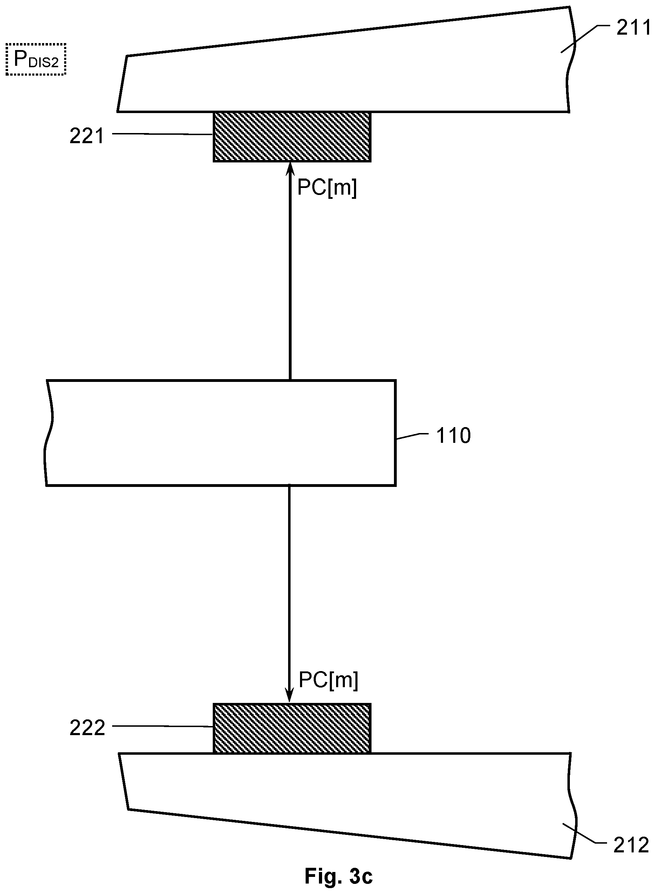

In particular, the pressure signal F indicates the magnitude of the force experienced in the gear assembly 220 when the friction member(s) 221/222 is/are located in the engaged position PENG and/or a disengaged position P_{DIS2} designating a maximum retraction of the friction member(s) 221/222 from the rotating member 110, i.e. in one or both of the two extreme end positions for the friction member(s) 221/222 in relation to the rotatable member 110. Figure 3c illustrates the disengaged position P_{DIS2}. Based on the pressure and pulse count signals F and PC, the controller 120 is configured to check if the alarm criterion is fulfilled; and if the alarm criterion is fulfilled, the controller 120 is further configured to trigger the alarm A. In practice, the triggering of the alarm A may for example involve setting a flag in a maintenance database, sending a message to one or more designated recipients and/or generating an acoustic and/or visual alarm.

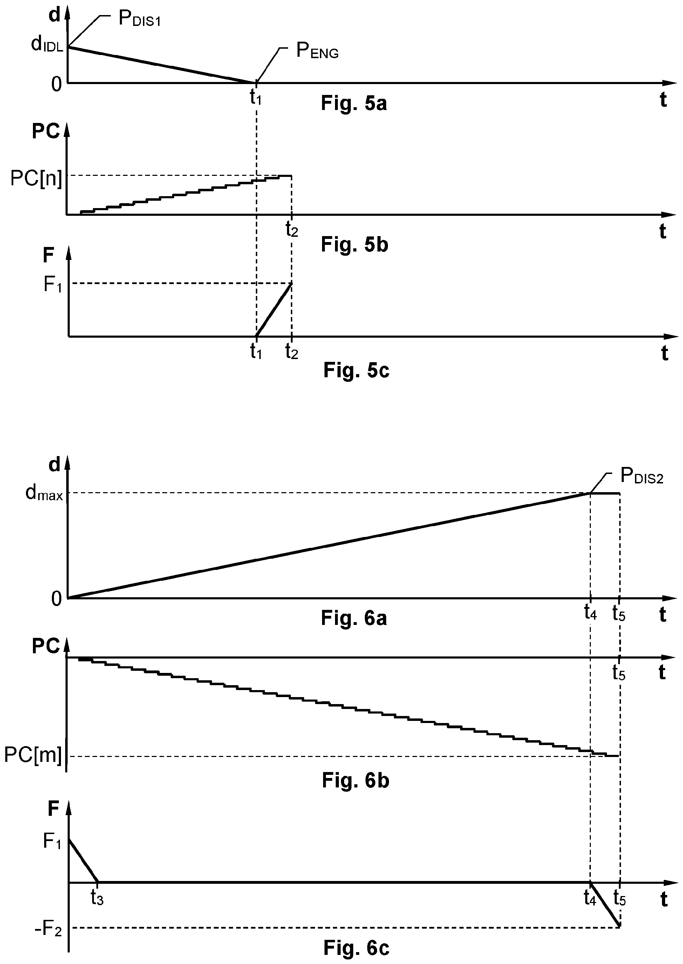

Now, referring to Figures 3a, 3b, 5a, 5b and 5c, we will explain how the wear of the friction member(s) 221/222 is monitored according to a first embodiment of the invention. Here, the controller 120 is configured to execute the steps: (a1), (b1), (c1) and (d1).

In step (a1), the controller 120 records a first number of pulse counts PC[n] that are obtained via the pulse count signal PC while the controller 120 generates the control signal CS to control the electric motor 230 to cause the gear assembly 220 to operate on the friction member(s) 221/222 in an approaching direction, i.e. wherein the friction member(s) 221/222 is/are moved from a first disengaged position P_{DIS1} to the engaged position PENG. Preferably, however not necessarily, the first disengaged position P_{DIS1} represents that the friction member(s) 221/222 is/are arranged at an idle distance d_{IDL} from the rotating member 110. The idle distance d_{IDL}, in turn, defines a predefined resting position for the friction member(s) 221/222 in between braking operations - a home position, from which resting position braking operations can be effected with a foreseeable delay after receiving the brake command cmd_{B} in the controller 120. In other words, when the friction members 221 and 222 are located at the idle distance d_{IDL}, the friction members 221 and 222 are moveable to the engaged position P_{ENG} by controlling the electric motor 230 in a forward direction until a first predefined number of pulse counts have been obtained in the controller 120 via the pulse count signal PC. We assume that the friction member(s) 221/222 reach/es the rotating member 110 at a point in time t₁.

After t₁, the controller 120 continues to generate the control signal CS to control the electric motor 230 to cause the gear assembly 220 to operate on the friction member(s) 221/222 in the approaching direction until the pressure signal F exceeds a positive threshold value F₁. Figure 5c illustrates this event at a point in time t₂ after t₁. When the pressure signal F has exceeded the positive threshold value F₁, the controller 120 ceases to control the electric motor 230 to cause the gear assembly 220 to operate on the friction member(s) 221/222 in the approaching direction.

In a subsequent step (b1), the controller 120 compares the first number PC[n] of pulse counts to a base number of pulse counts recorded by the controller 120 in a previous execution of step (a1), typically a most recent previous execution of step (a1). If the base number is lower than the first number, step (c1) follows. Otherwise, the procedure loops back to step (a1) awaiting a renewal of the brake command cmd_{B} in response to which the brake assembly 200 is configured to perform a braking action.

In step (c1), the controller increments a wear count by a difference between the first number PC[n] and the base number. Under normal circumstances, the wear count is at most increased by one count at the time. However, or course, larger increments are not precluded, for example if the brake assembly 200 performs an extremely hard braking operation. In any case, the controller 120 compares the wear count to a threshold count, and if the wear count exceeds the threshold count, step (d1) follows. Otherwise, the procedure loops back to step (a1).

In step (d1), the controller 120 triggers the alarm A, which for example may involve setting a flag in a maintenance database, sending a message to at least one designated recipient and/or generating an acoustic and/or visual alarm.

Referring now to Figures 3a, 3c, 6a, 6b and 6c, we will explain how the wear of the friction member(s) 221/222 is monitored according to a second embodiment of the invention.

Here, the controller 120 is configured to execute the steps: (a2), (b2) and (c2).

In step (a2), the controller 120 generates the control signal CS to control the electric motor 230 to operate on the gear assembly 220 to cause the gear assembly 220 to retract the friction member(s) 221/222 outwards from the engaged position P_{ENG} in a retreating direction from the rotating member 110. We assume that, initially, the friction member(s) 221/222 is/are applied onto the rotating member 110 such that the pressure signal F is at the positive threshold value F₁; at a point in time t₃ thereafter, the friction member(s) 221/222 release(s) the rotating member 110; and at a later point in time t₄, and the friction member(s) 221/222 reach/es a position where the friction member(s) 221/222 is/are maximally retracted from the rotating member 110, i.e. where the friction member(s) 221/222 are located at an outermost positioning relative to the rotating member 110. This represents a second disengaged position P_{DIS2} of the friction member(s) 221/ 222. To verify that the second disengaged position P_{DIS2} has actually been reached, the controller 120 continues to generate the control signal CS to control the electric motor 230 to operate on the gear assembly 220 to cause the gear assembly 220 to move in the retreating direction until the pressure signal F falls below a negative threshold value -F₂ at a point in time t₅ after t₄. The negative threshold value -F₂ here confirms that the friction member(s) 221/ 222 has/have reached the outermost positioning relative to the rotating member 110; and in response to that, the controller 120 ceases to generate the control signal CS to control the electric motor 230 to operate on the gear assembly 220 so that the gear assembly 220 retracts the friction member(s) 221/ 222 outwards from the rotating member 110.

Step (b2) involves recording a second number PC[m] of pulse counts that are obtained via the pulse count signal PC while executing step (a2). If the second number PC[m] exceeds a threshold count, this means that the friction member(s) 221/222 has/have travelled an excessive distance from rotating member 110 to the second disengaged position P_{DIS2}, which is a sign of that the friction member(s) 221/222 has/have been worn down.

Therefore, in step (c2), subsequent to step (b2) the controller 120 triggers the alarm A. If, however, the second number PC[m] does not exceed the threshold count, the procedure loops back to step (a2) awaiting a renewal of the brake command cmd_{B}.

It is worth noticing that, since in the embodiments illustrated in Figures 2, 3a, 3b and 3c the two pressing members 211 and 212 clamp the friction members 221 and 222 respectively against the brake disc 110 from opposite sides, the first and second pulse counts PC[n] and PC[m] in Figures 5b and 6b respectively reflect a sum of a first distance from a first side of the rotating member 110 to a first friction member 211 and a second distance from a second side of the rotating member 110 to a second friction member 212. If however, a drum brake is employed, wherein a single friction member is clamped against the outside or the outside of the drum, the first and second pulse counts PC[n] and PC[m] only reflect one distance from between the friction member and the drum.

In order to sum up, and with reference to the flow diagram in Figure 6, we will now describe the computer-implemented method according to the invention for controlling an electrically operated brake assembly for a rail vehicle, which method is implemented in at least one processing circuitry, for instance the above-mentioned at least one processor 430.

The brake assembly is presumed to contain a rotating member 110 mechanically linked to a wheel axle 115 of the rail vehicle 100, at least one friction member 221/222 movable between an engaged position P_{ENG} in which the at least one friction member 221/222 contacts the rotating member 110 and one or more disengaged positions P_{DIS1} and/or P_{DIS2} in which the rotating member 110 is freely rotatable without contacting the at least one friction member 221/222, a gear assembly 220 arranged to operate mechanically on the at least one friction member 221/222, and an electric motor 230 controllable via a control signal CS and configured to cause the gear assembly 220 to operate on the at least one friction member 221/222 to move between the engaged position PENG and the disengaged position(s) P_{DIS1}/P_{DIS2}.

In a first step 710, the control signal CS is generated, and in steps 720 and 730 parallel to step 710, a pulse-count signal PC and a pressure signal F respectively are obtained. Each pulse count in the pulse-count signal PC reflects a particular angular movement of an output shaft of the electric motor 230, and the pressure signal F indicates a magnitude of a force experienced in the gear assembly 220 when the at least one friction member 221/222 is located in the engaged position PENG and/or one of the disengaged positions, preferably P_{DIS2}.

A step 740 subsequent to steps 710, 720 and 730, checks if an alarm criterion is fulfilled with respect to a wear of the at least one friction member 221/222. For example, this may be checked by executing the above steps (a1) to (d1) or (a2) to (c2). If the alarm criterion is fulfilled, a step 750 follows. Otherwise, the procedure loops back to steps 710, 720 and 730.

In step 750, the alarm A is triggered, and thereafter the procedure ends.

All of the process steps, as well as any sub-sequence of steps, described with reference to Figure 7 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

Variations to the disclosed embodiments can be understood and effected by those skilled in the art in practicing the claimed invention, from a study of the drawings, the disclosure, and the appended claims.

The invention is not restricted to the described embodiments in the figures, but may be varied freely within the scope of the claims.

## Claims

1. An electrically operated brake assembly (200) for a rail vehicle (100), which brake assembly (200) comprises:
a rotating member (110) mechanically linked to a wheel axle (115) of the rail vehicle (100),
at least one friction member (221; 222) movable between an engaged position (P_{ENG}) in which the at least one friction member (221; 222) contacts the rotating member (110) and at least one disengaged position (P_{DIS1}, P_{DIS2}) in which the rotating member (110) is freely rotatable without contacting the at least one friction member (221; 222),
a gear assembly (220) arranged to operate mechanically on the at least one friction member (221; 222),
an electric motor (230) controllable via a control signal (CS) and configured to cause the gear assembly (220) to operate on the at least one friction member (221; 222) to move between the engaged position (PENG) and the at least one disengaged position (P_{DIS1}, P_{DIS2}), and
a controller (120) configured to generate the control signal (CS), **characterized in that** during the process of generating the control signal (CS), the controller (120) is configured to:
obtain a pulse-count signal (PC) in which each pulse count reflects a particular angular movement of an output shaft of the electric motor (230),
obtain a pressure signal (F) indicating a magnitude of a force experienced in the gear assembly (220) when the at least one friction member (221; 222) is located in at least one of the engaged position (PENG) and one of the at least one disengaged positions (P_{DIS2}),
check, based on the pressure and pulse count signals (F; PC), if an alarm criterion is fulfilled with respect to a wear of the at least one friction member (221; 222), and if the alarm criterion is fulfilled
trigger an alarm (A).

2. The brake assembly (200) according to claim 1, wherein the controller (120) is configured to execute the steps:
(a1) record a first number of pulse counts (PC[n]) obtained via the pulse count signal (PC) while generating the control signal (CS) to control the electric motor (230) to cause the gear assembly (220) to operate on the at least one friction member (221; 222) in an approaching direction wherein the at least one friction member (221; 222) is moved from a first one of the disengaged positions (P_{DIS1}) to the engaged position (PENG), continue to generate the control signal (CS) to control the electric motor (230) to cause the gear assembly (220) to operate on the at least one friction member (221; 222) in the approaching direction until the pressure signal (F) exceeds a positive threshold value (Fi),
(b1) compare the first number (PC[n]) of pulse counts to a base number of pulse counts recorded in a previous execution of step (a1), if the base number is lower than the first number
(c1) increment a wear count by a difference between the first number (PC[n]) and the base number, and if the wear count exceeds a threshold count
(d1) trigger the alarm (A).

3. The brake assembly (200) according to claim 2, wherein the first one of the disengaged positions (P_{DIS1}) represents an idle distance (d_{IDL}) between the rotating member (110) and the at least one friction member (221; 222), which idle distance (d_{IDL}) defines a predefined resting position for the at least one friction member (221; 222) in between braking operations.

4. The brake assembly (200) according to any one of the preceding claims, wherein the controller (120) is configured to execute the steps:
(a2) generate the control signal (CS) to control the electric motor (230) to operate on the gear assembly (220) to cause the gear assembly (220) to retract the at least one friction member (221; 222) outwards from the engaged position (P_{ENG}) in a retreating direction from the rotating member (110) until the pressure signal (F) falls below a negative threshold value (-F₂) designating a maximum retraction of the at least one friction member (221; 222) from the rotating member (110), which maximum retraction represents a second one of the disengaged positions (P_{DIS2}),
(b2) record a second number (PC[m]) of pulse counts obtained via the pulse count signal (PC) while executing step (a2), and if the second number (PC[m]) exceeds a threshold count
(c2) trigger the alarm (A).

5. The brake assembly (200) according to any one of the preceding claims, wherein:
the electric motor (230) is configured to produce a rotational force on an output shaft of the electric motor (230), which rotational force is proportional to a drive current being fed into the electric motor (230), and
the controller (120) is configured to derive the pressure signal (F) based on the drive current fed into the electric motor (230).

6. The brake assembly (200) according to any one of claims 1 to 4, wherein the gear assembly (220) comprises a force sensor (225) configured to generate the pressure signal (F).

7. The brake assembly (200) according to claim 6, wherein the force sensor (225) comprises one of a load cell and a wire strain gauge.

8. The brake assembly (200) according to any one of claims 6 or 7, wherein the force sensor (225) is arranged on a bolt (B1, B2) in the gear assembly (220).

9. The brake assembly (200) according to any one of the preceding claims, wherein the electric motor (230) is a stepper motor configured to generate the pulse-count signal (PC).

10. The brake assembly (200) according to any one of the claims 1 to 8, wherein the angular position sensor (237) is a component separate from the electric motor (230).

11. The brake assembly (200) according to claim 10, wherein the angular position sensor (237) is comprised in a Bevel gear (235) arranged to connect the output shaft of the electric motor (230) with the gear assembly (220).

12. The brake assembly (200) according to any one of the preceding claims, wherein the rotating member (110) is a brake disc and the at least one friction member (221; 222) comprises two friction members arranged on a respective one of two pressing members (211; 212) configured to clamp the friction members (221; 222) against the brake disc (110) to perform a braking action in response to a brake command (cmd_{B}).

13. A computer-implemented method for controlling an electrically operated brake assembly (200) for a rail vehicle (100), which brake assembly (200) comprises a rotating member (110) mechanically linked to a wheel axle (115) of the rail vehicle (100), at least one friction member (221; 222) movable between an engaged position (P_{ENG}) in which the at least one friction member (221; 222) contacts the rotating member (110) and at least one disengaged position (P_{DIS1}, P_{DIS2}) in which the rotating member (110) is freely rotatable without contacting the at least one friction member (221; 222), a gear assembly (220) arranged to operate mechanically on the at least one friction member (221; 222), and an electric motor (230) controllable via a control signal (CS) and configured to cause the gear assembly (220) to operate on the at least one friction member (221; 222) to move between the engaged position (PENG) and the at least one disengaged position (P_{DIS1}, P_{DIS2}), the method comprising:
generating the control signal (CS),
**characterized by**, while generating the control signal (CS), the method further comprises:
obtaining a pulse-count signal (PC) in which each pulse count reflects a particular angular movement of an output shaft of the electric motor (230),
obtaining a pressure signal (F) indicating a magnitude of a force experienced in the gear assembly (220) when the at least one friction member (221; 222) is located in at least one of the engaged position (PENG) and one of the at least one disengaged positions (P_{DIS2}), based thereon
checking if an alarm criterion is fulfilled with respect to a wear of the at least one friction member (221; 222), and if the alarm criterion is fulfilled
triggering an alarm (A).

14. The method according to claim 13, further comprising the steps:
(a1) recording a first number of pulse counts (PC[n]) obtained via the pulse count signal (PC) while generating the control signal (CS) to control the electric motor (230) to cause the gear assembly (220) to operate on the at least one friction member (221; 222) in an approaching direction wherein the at least one friction member (221; 222) is moved from a first one of the disengaged positions (P_{DIS1}) to the engaged position (PENG), continue to generate the control signal (CS) to control the electric motor (230) to cause the gear assembly (220) to operate on the at least one friction member (221; 222) in the approaching direction until the pressure signal (F) exceeds a positive threshold value (Fi),
(b1) comparing the first number (PC[n]) of pulse counts to a base number of pulse counts recorded in a previous execution of step (a1), if the base number is lower than the first number
(c1) incrementing a wear count by a difference between the first number (PC[n]) and the base number, and if the wear count exceeds a threshold count
(d1) triggering the alarm (A).

15. The method according to claim 14, wherein the first one of the disengaged positions (P_{DIS1}) represents an idle distance (d_{IDL}) between the rotating member (110) and the at least one friction member (221; 222), which idle distance (d_{IDL}) defines a predefined resting position for the at least one friction member (221; 222) in between braking operations.

16. The method according to any one of claims 13 to 15, further comprising the steps:
(a2) generating the control signal (CS) to control the electric motor (230) to operate on the gear assembly (220) to cause the gear assembly (220) to retract the at least one friction member (221; 222) outwards from the engaged position (P_{ENG}) in a retreating direction from the rotating member (110) until the pressure signal (F) falls below a negative threshold value (-F₂) designating a maximum retraction of the at least one friction member (221; 222) from the rotating member (110), which maximum retraction represents a second one of the disengaged positions (P_{DIS2}),
(b2) recording a second number (PC[m]) of pulse counts obtained via the pulse count signal (PC) while executing step (a2), and if the second number (PC[m]) exceeds a threshold count
(c2) triggering the alarm (A).

17. A computer program (425) loadable into a non-volatile data carrier (420) communicatively connected to at least one processor (430), the computer program (425) comprising software for executing the method according any of the claims 12 to 15 when the computer program (425) is run on the at least one processor (430).

18. A non-volatile data carrier (420) containing the computer program (425) of the claim 16.
